Europäisches Patentamt

European Patent Office

Office européen des brevets

(19)

(11) **EP 1 285 884 A1**

(12) **EUROPEAN PATENT APPLICATION**
published in accordance with Art. 158(3) EPC

(43) Date of publication:
    **26.02.2003 Bulletin 2003/09**

(51) Int Cl.⁷: **C02F 1/467**

(86) International application number:
    **PCT/JP01/03722**

(21) Application number: **01926047.0**

(22) Date of filing: **27.04.2001**

(87) International publication number:
    **WO 01/083378 (08.11.2001 Gazette 2001/45)**

(84) Designated Contracting States:
    **AT BE CH CY DE DK ES FI FR GB GR IE IT LI LU
    MC NL PT SE TR**

(30) Priority: **27.04.2000 JP 2000127687**

(71) Applicant: **Nippon Oil Corporation
    Tokyo 105-8412 (JP)**

(72) Inventors:
    • **HIRAYAMA, Takayuki
      c/o NIPPON OIL CORPORATION
      Yokohama-shi, Kanagawa 231-0815 (JP)**

    • **NAKAYAMA, Keisuke,
      c/o NIPPON OIL CORPORATION
      Yokohama-shi, Kanagawa 231-0815 (JP)**
    • **SHIMO, Yoshiyuki,
      c/o NIPPON OIL CORPORATION
      Yokohama-shi, Kanagawa 231-0815 (JP)**
    • **MIZUTA, Haruyoshi,
      c/o NIPPON OIL CORPORATION
      Yokohama-shi, Kanagawa 231-0815 (JP)**

(74) Representative: **Modin, Jan
    Ehrner & Delmar Patentbyra AB
    Box 10316
    100 55 Stockholm (SE)**

(54) **METHOD AND APPARATUS FOR CLARIFICATION TREATMENT OF WATER**

(57)    A method for purifying water characterized in that a chamber is separated by a diaphragm into an anode section and a cathode section, a voltage is applied between the anode and the cathode while an oxygen-containing gas is supplied to the cathode section so as to generate a hypohaloric acid and hydrogen peroxide in the anode and cathode sections, respectively, and the water to be treated is first supplied to the anode section to be contacted with the hypohaloric acid and is then introduced to the cathode section to be contacted with the hydrogen peroxide.

Fig. 3

EP 1 285 884 A1

## Description

[Technical Field]

The present invention relates to a novel method and apparatus for purification treatment of water, and more particularly to a method and apparatus which can provide sterilization/cleaning, disinfection, and decoloration of water and which are human-friendly and free from the pollution of the environment.

[Background Art]

Various plants such as petrochemical- and chemical-plants and thermal/nuclear power stations need a large amount of industrial water for cooling the heat exchangers, condensers, drain systems and the like. However, many troubles caused by slimes due to microbial pollution have occurred, resulting in various harmful effects.

Other than industrial tap water, main sources of industrial water are sea water, lake water, river water, and ground water. Microbes in such industrial waters adsorb to walls and piping of watering facilities and secrete a large quantity of adhesive substances, resulting in the formation of slime layer where microbes breed and form a skin. Such slime layers and microbe skin bring disadvantages such as the decrease of the thermal exchange rate upon cooling and the clogging of the strainer by peeled-off slime.

Furthermore, in the case of using sea water, large ocean living things such as barnacles, mussels, oysters or the like absorb over microbe skin and possibly breed and grow there, causing the clogging of the piping. However, currently there is nothing to do but scraping off these living things using manpower regularly.

In the case of using sea water or a mixed water of sea water and fresh water in an aquarium, a sea water swimming pool, or a cultivation farm, or for an aquaculture, it is desired that the water is subjected to sterilization and cleaning treatment beforehand. In order to preventing unwanted bacteria from breeding in the storage tank, it is also desired that the tank is regularly or constantly subjected to sterilization and cleaning treatment.

Furthermore, washing water for medical tools is indispensably sterilized and cleaned. Among such tools, medical forceps and scissors, and dentures are required to be washed with a detergent having a strong washing power because physical cleaning can not wash sufficiently to the extent of narrow spaces between the parts of the tools.

Various methods for sterilizing and cleaning such water have been put into practice. A first measure may be exemplified by a method in which a chemical agent containing hypochlorus acid or hypobromous acid is added to the water to be treated. A method is also known in which without using such a chemical agent, the water to be treated is directly electrolyzed so as to form the oxide of a hypochlorus acid or the like, as disclosed in Japanese Patent Laid-Open Nos. 56-68454, 10-300367, and 4-330986.

However, in the case of forming the oxide of a hypochlorus acid or the like by electrolysis, the hypochlorus acid may remain in the water to be treated. If the concentration of the remaining hypochlorus acid is high, it leads to a problem of secondary pollution. Particularly, in the case of electrolyzing sea water, trihalomethanes or aromatic organic chlorine compounds are accidentally produced if some organic creatures in the sea water are reacted with the hypochlorus acid.

Therefore, in the case of applying this method to water for aquiculture, there is a risk of bringing the death of bred creatures such as fish. If the treated water contacts with or is taken into the human body, it adversely affects the human in terms of safety by bringing thereto diseases such as cancer.

Since the medical tools subjected to sterilization/cleaning using a hypochlorus acid can not be put in use as they are, it is a common practice to rinse the tools using a large quantity of sterile physiological saline. However, there are problems that such process conducted after the sterilization/cleaning makes it difficult to keep the tools in sterile conditions and the process itself is bothersome.

As a second measure, there are methods using ultraviolet radiation or heat treatment. However, these methods have also problems that it is difficult to sterilize and clean the water to be treated completely and the cost will be higher if the amount of the water is increased, leading to the necessity of a large-scale apparatus.

As a third measure, there have been proposed sterilization/cleaning methods by ozone-treatment as disclosed in Japanese Patent Laid-Open Publication Nos. 8-80493 and 7-210481. However, needless to mention, these methods have not only environmental problems that the remaining ozone adversely affects the human body and the application of these methods to natural sea water would cause the generation of hypobromous acid which is extremely harmful to the human body, but also economical problems that the cost for conducting the methods will be greatly increased.

The present invention was made in view of the current circumstances and the object of the present invention is to provide a method and apparatus which can sterile and clean sea water, lake water, river water, ground water and industrial water effectively without causing the pollution of the environment.

[Disclosure of the Invention]

It is known that when metal electrodes are immersed into water containing a halogen ion, followed by the application of a direct voltage, a hypohaloric acid is generated from the anode resulting from the following reaction mechanism:

$$2H_2O \rightarrow O_2 + 4H^+ + 4e^- \quad (1)$$

$$2X^- \rightarrow X_2 + 2e^- \quad (2)$$

$$X_2 + H_2O \Leftrightarrow HOX + HX \quad (3)$$

wherein X is a halogen atom.

Whereas, it is also known that when a direct voltage is applied using a carbon electrode as a cathode, the following reaction occurs at the surface of the cathode, resulting in the generation of hydrogen peroxide ions:

$$O_2 + H_2O + 2e^- \rightarrow HO_2^- + OH^- \quad (4)$$

Therefore, when a metal electrode used as an anode and a carbon electrode are immersed into water containing a halogen ion, followed by the application of a direct voltage, a hypohaloric acid can be generated from the anode in accordance with the above reaction formulae (2) and (3) and simultaneously hydrogen peroxide ions can be generated from the cathode in accordance with the reaction formula (4).

Furthermore, it is also known that in the coexistence of a hypohaloric acid and hydrogen peroxide ions, the following reaction is instantly progressed whereby the hypohaloric acid and hydrogen peroxide ions are converted to a halogen ion and water and oxygen, respectively:

$$HOX + H_2O_2 \rightarrow X^- + O_2 + H_2O + H^+ \quad (5).$$

Next, when oxidation-reduction potentials are compared so as to estimate the generation of the electric reaction formulae (1), (2), and (4) including cathode reaction formula (6) below corresponding to formula (1), the formulae (1), (2), (4), and (6) are directed to have a relationship represented by formulae (7), (8), (9) and (10), respectively, by Nernst formula (refer to "Electric-Chemical Handbook, edited by Electric-Chemical Association), and when an electrolysis is carried out at a potential at which the reaction represented by formulae (8) and (9)(9') preferentially progress, the progress of the reaction of formula (10) wherein a hydrogen gas is generated can be avoided while inevitably the reaction of formula (7) progresses:

$$2H_2O + 2e^- \rightarrow H_2 + 2OH^- \quad (6)$$

$$E(O_2) = 1.229 - 0.059pH \quad (7)$$

$$E(Cl_2) = 1.396 \quad (8)$$

$$E(H_2O_2) = 0.695 - 0.059pH (pH < 11.62) \quad (9)$$

$$E(HO_2^-) = 0.352 - 0.030pH (pH \geqq 11.62) \quad (9')$$

$$E(H_2) = -0.059pH \quad (10).$$

Therefore, in such a case, since the reaction of formulae (1) and (2) theoretically progress at the anode side, while only the reaction of formula (4) progress at the cathode side, stoichiometrically the production of hydrogen peroxide always exceeds that of a hypohaloric acid.

It was found by the present inventors that water can be purified by a method wherein an anode and a cathode is separated by a diaphragm and two conduits are provided such that a hypohaloric acid is generated from the anode and the remaining hypohaloric acid after sterilization, cleaning, disinfection, and decoloration is electrolyzed by hydrogen peroxide generated form the cathode.

That is, according to a first aspect of the present invention, there is provided a method for purifying water wherein a chamber is partitioned into an anode section and a cathode section by a diaphragm, a voltage is applied between the anode and the cathode while an oxygen-containing gas is supplied to the cathode section so as to generate a hypohaloric acid and hydrogen peroxide in the anode section and the cathode section, respectively, and the water to be treated is first supplied to the anode section to be contacted with the hypohaloric acid and is then introduced to the cathode section to be contacted with hydrogen peroxide.

According to a second aspect of the present invention, there is provided a method for purifying water wherein a chamber is partitioned into an anode section and a cathode section by a diaphragm, a voltage is applied between the anode and the cathode while an oxygen-containing gas is supplied to the cathode section so as to generate a hypohaloric acid and hydrogen peroxide in the anode section and the cathode section, respectively, and the water to be treated which has been supplied to the anode section so as to be contacted with the hypohaloric acid is mixed with the water to be treated which has been supplied to the cathode section to be contacted with the hydrogen peroxide.

According to a third aspect of the present invention, there is provided a method for purifying water wherein a chamber is partitioned into an anode section and a cathode section by a diaphragm, a voltage is applied to between the anode and the cathode while an oxygen-containing gas is supplied to the cathode section so as to generate a hypohaloric acid and hydrogen peroxide in the anode section and the cathode section, respectively, and the water to be treated which has been supplied to the anode section so as to be contacted with the hypohaloric acid is mixed with part of the water to be treated which has been supplied to the cathode section to be contacted with the hydrogen peroxide, followed by supplying the mixture to the cathode section again.

In the purification method according to the first, second, and third aspect of the present invention, it is preferred that a carbon electrode is used as the cathode, a metal electrode is used as the anode, and a voltage of 1.5V or higher and 20V or lower is applied therebetween.

In the purification method according to the first, second, and third aspect of the present invention, the water to be treated contains preferably a halogen ion in an amount of 0.1 to 1 mol/l.

According to a forth aspect of the present invention, there is provided an apparatus for purifying water which comprises a chamber separated by a partition at least part of which is formed by a diaphragm, into an anode section provided therein with one or more anodes generating a hypohaloric acid by the application of a voltage and into a cathode section provided therein with one or more cathodes generating a hydrogen peroxide by the application of a voltage wherein the anode section is provided with a supplying tube for supplying the water to be treated thereto and an introducing pipe for introducing the water treated in the anode section to the cathode section and the cathode section is provided with a supplying pipe for supplying thereto an oxygen-containing gas and a discharging pipe for discharging the water treated in the cathode section.

According to a fifth aspect of the present invention, there is provided an apparatus for purifying water which comprises a chamber separated by a partition at least part of which is formed by a diaphragm, into an anode section provided therein with one or more anodes generating a hypohaloric acid by the application of a voltage and into a cathode section provided therein with one or more cathodes generating a hydrogen peroxide by the application of a voltage wherein the anode section is provided with a supplying pipe for supplying the water to be treated to the anode section and a discharging pipe for discharging the water treated in the anode section and the cathode section is provided with a supplying pipe for supplying the water to be treated to the cathode section, a supplying pipe for supplying an oxygen-containing gas to the cathode section, and a discharging pipe for discharging the water treated in the cathode section; and the discharging pipes of the anode and cathode sections are connected with a mixing bath provided with a discharging pipe for discharging the water purified in the bath.

According to a sixth aspect of the present invention, there is provided an apparatus for purifying water which comprises a chamber separated by a partition at least part of which is formed by a diaphragm, into an anode section provided therein with one or more anodes generating a hypohaloric acid by the application of a voltage and into a cathode section provided therein with one or more cathodes generating a hydrogen peroxide by the application of a voltage wherein the anode section is provided with a supplying pipe for supplying the water to be treated to the anode section and a discharging pipe for discharging the water treated in the anode section and the cathode section is provided with a supplying pipe for supplying the water to be treated to the cathode section, a supplying pipe for supplying an oxygen-containing gas to the cathode section, and two discharging pipes for discharging the water treated in the cathode section; and the discharging pipe of the anode section is connected with one of the two discharging pipes of the cathode section and further connected with the supplying pipe for supplying the water to be treated into the cathode section.

In the apparatus according to the forth, fifth, and sixth aspects of the present invention, a halogen ion adding bath is preferably arranged in the prior stage of the apparatus.

As described above, in the first method of the present invention, a chamber is separated by a diaphragm into an anode section and a cathode section, a voltage is applied between the anode and the cathode while an oxygen-containing gas is supplied so as to generate a hypohaloric acid and hydrogen peroxide in the anode section and cathode section, respectively, and the water to be treated is first supplied into the anode section and sterilized and cleaned by the hypohaloric acid. The water treated in the anode section is next introduced into the cathode section where the remaining hypohaloric acid is decomposed by the hydrogen peroxide. Therefore, the water discharged from the cathodic section contains no hypohaloric acid and thus will not pollute the environment.

In the second method of the present invention, the water to be treated is supplied to the anode section and the cathode section, individually such that the water in the anodic section is sterilized and cleaned with the hypohaloric acid and the water in the cathode section is sterilized and cleaned with hydrogen peroxide. The water sterilized and cleaned in the anode section and the water sterilized and cleaned in the cathode section are introduced into the mixing bath, respectively wherein the remaining hypohaloric acid after being subjected to the sterilization and cleaning treatment is decomposed with the hydrogen peroxide. Therefore, the water discharged from the mixing bath contains no hypohaloric acid and thus will not pollute the environment.

Furthermore, in the third method of the present invention, the water to be treated is supplied to the anode section and the cathode section, individually such that the water in the anodic section is sterilized and cleaned with the hypohaloric acid and the water in the cathode section is sterilized and cleaned with hydrogen peroxide. The water sterilized and cleaned in the anode section is mixed with a part of the water sterilized and cleaned in the cathode section. Although the remaining hypohaloric acid after being subjected to sterilization and cleaning treatment in the anode section is decomposed with hydrogen peroxide, the mixed water is re-introduced into the cathode section thereby decomposing the hypohaloric acid completely and further maintaining the cleaning effect of the chamber walls by the introduction of the mixed water for a long period of time.

No particular limitation is imposed on the concentration of the halogen ion in the water to be treated. However, in order to maintain a certain extent of sterilization effect, the concentration is preferably 0.01 mol/L or higher and particularly preferably 0.1 mol/L or higher. In order to lessen the load in the apparatus and control the reaction easily, the concentration of 1 mol/L or lower is preferred.

A halogen ion adding bath is preferably arranged in the prior stage the apparatus so as to adjust the concentration of a halogen ion to be in the range. The halogen ion adding bath is preferably connected with a supplying line for the water to be treated.

The halogen ion is generally supplied as a halogenated alkali such as halogenated sodium.

The operation mode of apparatuses according to the present invention will be described with reference to the annexed drawings.

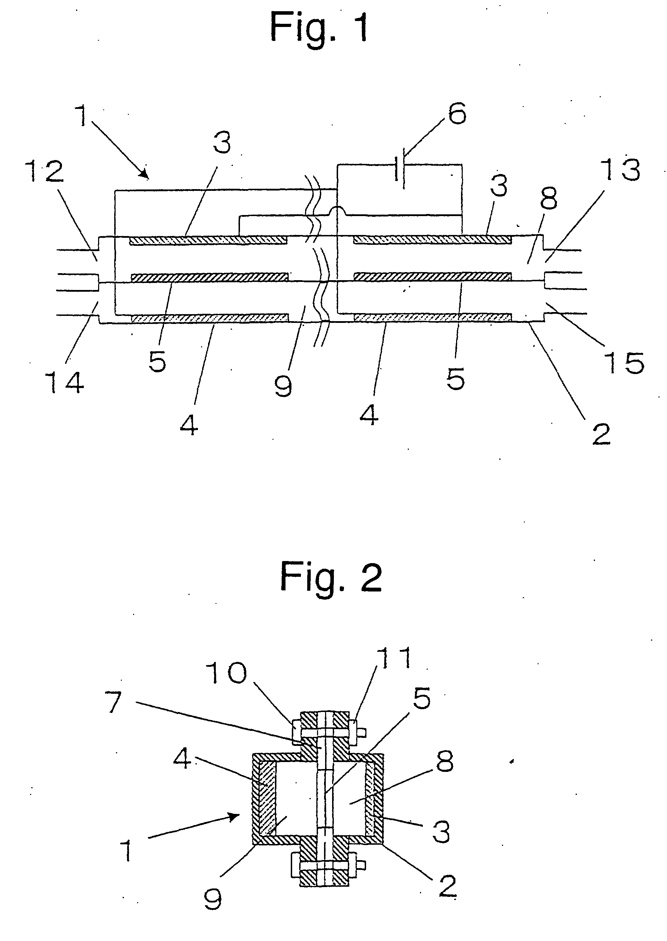

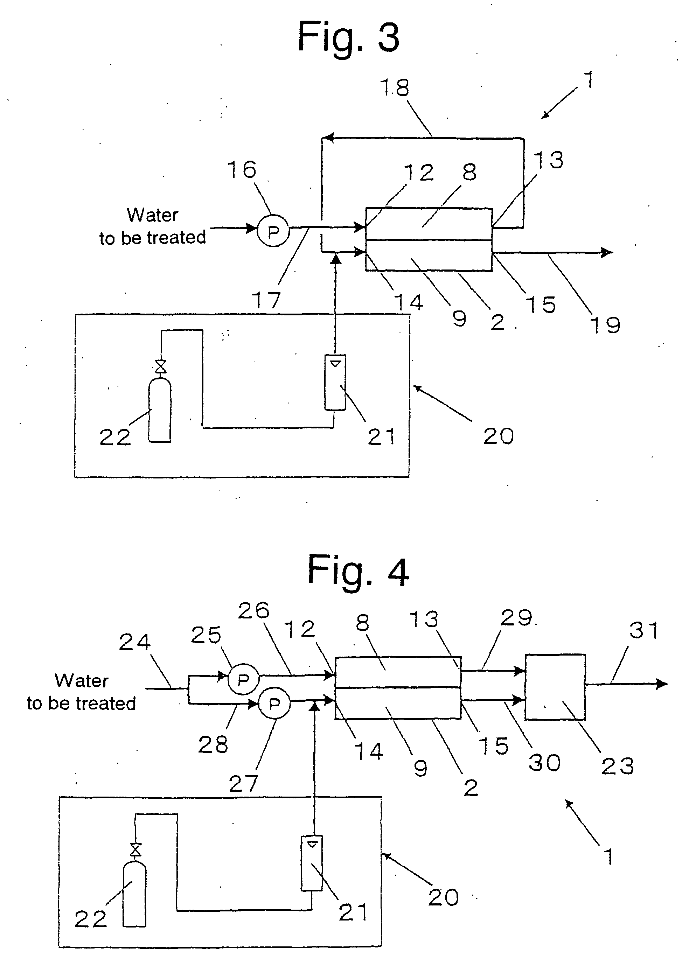

Fig. 1 is a diagrammatic view of the chamber of an apparatus for purifying water (also hereinafter referred to as a water-treatment apparatus). Fig. 2 is a cross-sectional view of the chamber. Figs. 3 through 5 show the structural view showing the operational modes of the water-treatment apparatuses.

In Figs. 1 through 5, the numeral 1 indicates a water-treatment apparatus for purifying the water to be treated by annihilating the bacteria and virus existing in sea water, lake water, river water, ground water, industrial water, and mixtures thereof.

No particular limitation is imposed on the shape of the chamber 2 of the water-treatment apparatus 1. Therefore, the chamber 2 may be rectangular, polygonal or circular in the cross-section. With the objective of being able to treat a large amount of the water, the chamber 2 has preferably a pipe-like shape whose cross section may be circular, rectangular, or polygonal. No particular limitation is imposed on the material of the chamber 2 as long as it has insulating properties and is free from erosion by sea water or hydrogen peroxide. For example, the chamber 2 is preferably formed from a synthetic resin such as polyolefin and polyvinyl chloride, glass, a resinous lining material, titanium, or stainless, nickel, or PTFE resin having excellent anti-erosion properties. In the case of using a material such as metal which may be decomposed by hydrogen peroxide, a film containing a carbonaceous component or formed from other anti-erosive material is formed on the material, i.

e., on the inner walls of the chamber. Alternatively, a metal material whose interior is treated to be insulated may also be used in the present invention.

As shown in Figs. 1 and 2, in the first embodiment, the chamber 2 has a pipe-like shape whose lengthwise cross section is rectangular. The chamber 2 is provided on one side with an anode 3 and on the opposing side with a cathode 4. No particular limitation is imposed on the shape of the anode 3 and cathode 4. However, those in the shape of a plate, mesh, or bar are preferably used. For example, plate-like (rectangular) dimensionally-stable electrodes are used, and these electrodes, i.e., the anode 3 and the cathode 4 are arranged on the sides of the chamber 2 as shown in Fig. 1. The anode 3 and the cathode 4 continuously extending in the longitudinal direction may be arranged. Alternatively, as shown in Fig. 1, a plurality of the plate-like anodes 3 and cathodes 4 each having a certain length may be arranged at certain intervals such that the anodes 3 and the cathodes 4 face each other.

The anode 3 generates a hypohaloric acid in the water to be treated by electrolysis and is also a counter electrode allowing the cathode 4 to generate hydrogen peroxide. Although not restricted, it is preferred to use metal which is free from elution caused by an electric reaction and highly resistant to an oxidation reaction because the elution of the anode material would pollute a diaphragm 5.

No particular limitation is imposed on the material for the anode as long as it can generate a hypohaloric acid. Eligible materials are metals such as platinum, iridium, ruthenium, and titanium and oxides thereof which are low in chlorine overvoltage, are extremely low in wear, compared with other metals or oxides thereof, and thus can be used for a long period of time without changes . For example, there may be used titanium or a titanium alloy substrate having the same characteristics as titanium, or electrode materials such as niobium or tantalum whose surfaces are coated with ruthenium oxide, palladium oxide, iridium oxide, platinum, or a complex of two or more thereof. Furthermore, there also may be used a metal web having a large surface area per unit area.

The cathode 4 is an electrode generating hydrogen peroxide by applying a voltage. No particular limitation is imposed on the material of the cathode 4 as long as it enables dielectric reduction. For example, the cathode material may be graphite, a carbon-fiber material, or a porous shapeless carbon molded article. Graphite may be those obtained by extruding and calcining, embossing and calcining, or CIP forming and calcining coke. The carbon-fiber material may be a knitted carbon-fiber material which may be commercially available graphite felt or cloth. Of course, carbon-fiber materials other than graphite felt or cloth may be used.

The porous shapeless carbon material is a non-crystalline and substantially non-oriented, i.e., non-anisotropic porous carbon material. Such a material may be exemplified by porous shapeless carbon-fibers and porous carbon molded articles.

The porous carbon fiber material may be obtained by the following manner. A novolak-type phenol resin is melt-spun and then heat-treated with formalin thereby obtaining a non-crystalline and non-oriented phenol fiber wherein a three-dimensional cross-linking is formed. This phenol fiber is anti-flammable, heat-resistant, and chemical-resistant and thus if heated, is carbonized with maintaining the shape thereby obtaining a carbon fiber with a shapeless structure which is high in the carbon content. The phenol fiber is free from melting or contraction. Therefore, the carbonization of the fiber after being processed to be felt or cloth can produce a shapeless carbon fiber felt or cloth. Although this material does not have a crystalline structure which graphite normally has, it is slightly cross-linked and flexible. Therefore, this shapeless glassy carbon, i.e., glass-like carbon is the most suitable for the electrode.

In order to maintain the shape of the porous carbon material as the electrode, the material is preferably in felt-like or cloth-like shape. The felt or cloth is preferably filled into a frame for holding the electrode such that the desired area and thickness can be obtained. The filling density significantly influences the electrolysis efficiency. A low filling density would reduce the electrolysis efficiency because the contact of the electrode with oxygen and the water to be treated is not sufficient. A too high filling density would reduce the electrolysis efficiency because the flow of oxygen and the water to be treated is hindered.

A voltage is applied to the anode 3 and the cathode 4 by being connected to a constant voltage direct current source 6. When applying a voltage, the reaction progress theoretically with the application of a voltage of 1.5V. However, a higher voltage is preferably applied such that the generation reactions of a hypohaloric acid and hydrogen peroxide progress efficiently. However, because a too high voltage brings about simultaneously the hydrogen peroxide decomposition reaction and the hydrogen generation reaction represented by formula (10) on the cathode, other than the hydrogen peroxide generation reaction represented by formula (9) and causes the decrease of the hydrogen peroxide generation efficiency, the voltage varies depending on the concentration or flow rate of an electrolyte but is selected from the range of preferably not exceeding 20 V DC and more preferably between 2 to 15 V. For the purpose of removing contaminants formed on the surfaces of the electrodes during the operation, an electric control circuit may be provided which circuit reverses automatically the voltage between the anode 3 and the cathode 4 every certain period and for a certain period. The time periods are preferably for 5 minutes every 24 hours.

The chamber 2 is sectioned by a partition wall 7 extending parallel between the plate-like anodes 3 and cathodes 4 into an anode section 8 and a cathode section 9. A part or the whole of the partition wall 7 is formed by a diaphragm 5 such that an electric current passes between the anode 3 and the cathode 4.

No particular limitation is imposed on the material of the diaphragm 5 as long as an electric current flows between the anode 3 and the cathode 4. Preferred materials are electron insulation porous films such as porous fluoroplastics, hydrocarbon resins, and ion-exchange membranes.

Specific examples of porous fluoroplastics are polyvinylidene fluoride (PVDF) and polytetrafluoroethylene (PTFE). Eligible hydrocarbon resins are those wherein polyethylene, POVAL (PVA), polyacetylene, cellulose, or polyethylene chloride is used as the base. These bases may be copolymerized in a suitable ratio. Alternatively, the bases may be chemically modified with an additive.

Examples of ion-exchange membranes are Nafion 117, Nafion 350, Nafion 902, and Nafion 961 having a sulfonic acid group or a carboxylic acid, all of which are manufactured by Dupont. Ion-exchange membranes can prevent each ion generated from the anode or cathode from being consumed at the counter electrode side and allow the electrolysis to progress promptly even in the case where the electric conductivity of the electrolyte is low as is in the present invention.

Further alternatively, inorganic materials such as glass wool and asbestos may also be used as the diaphragm.

The diaphragm 5 (partition wall 7) is positioned in front of the cathode 4, i.e., between the anode 3 and cathode 4. No particular limitation is imposed on the space or distance between the cathode 4 and the diaphragm 5. However, a narrower space or distance is better thereby obtaining a higher current value. For example, in the case of using a porous material such as graphite felt, it may be contacted with the cathode. In the case of using a graphite plate so as to allow water to pass through the space between the diaphragm and the electrode, the distance between the diaphragm and the cathode is preferably 50 cm or less and more preferably 20 cm or less. No particular limitation is imposed on the space or distance between the anode 3 and the diaphragm 5. However, a narrower space or distance is better thereby obtaining a higher current value. For example, in the case of using a mesh-like diaphragm, they may be contacted to each other. In the case of using a plate-like diaphragm shutting the flow of water completely, the distance is preferably 0.5 to 50 cm and more preferably 1 to 20 cm.

No particular limitation is imposed on the fastening means for the diaphragm 5 (partition wall 7). For example, as shown in Fig. 2, the diaphragm may be fastened using bolts 10 and nuts 11. Alternatively, the diaphragm may be fastened to the chamber 2 at the anode section 8 side using fastening means such as screws, bolts, and nuts.

An inlet 12 for introducing the water to be treated and an outlet 13 for discharging the treated water are provided in one and the other end of the anode section 8, respectively. An inlet 14 and an outlet 15 are provided in one end and the other end of the cathode section 9, respectively.

As shown in Fig. 3, in the first example of the water-treatment apparatus, a supplying pipe 17 with a pump means 16 such a suction pump for supplying the water to be treated is connected to the inlet 12 of the anode section 8, the outlet 13 of the anode section is connected to the inlet 14 of the cathode section 9 via a conduit 18, and the outlet 15 of the cathode section 9 is connected to a discharging pipe 19 for discharging the treated water.

In the embodiment shown in Fig. 3, although the flow direction in the anode section 8 is the same as that in the cathode section 9, the inlet and outlet of the anode section 8 or cathode section 9 may be reversed such that the water flows in the reversed direction.

It is preferred to supply oxygen in 0.1 to 1,000 times (volume ratio) more of the water to be treated in the cathode section 9 so as to effect the generation of hydrogen peroxide in the cathode section efficiently. In order that, the cathode section is preferably provided with an oxygen-containing gas supplying means 20. As one example of such an oxygen-containing gas supplying means 20, a supplying pipe for supplying an oxygen-containing gas from an oxygen-containing gas source 22 via a flow meter 21 to the cathode section may be connected to the conduit 18 or 28 located in the upper stream of the inlet 14, as shown in Fig. 3 through 5. Although not shown, as an another example, the oxygen-containing gas supplying pipe may be directly connected to the cathode section.

The mixing ratio of the water to be treated and the oxygen-containing gas is arbitrary selected. For example, if the oxygen-containing gas is not mixed and if the water to be treated contains remaining dissolved oxygen, it is theoretically possible to generate hydrogen peroxide. However, the amount of oxygen has a great influence on the electrolysis efficiency. Therefore, a too less amount of oxygen would fail to achieve sufficient contact with the electrode and lead to poor electrolysis efficiency, resulting in the shortage of oxygen, i.e., the raw material for generating hydrogen peroxide. In such a case, the number of moles of the generated hydrogen peroxide will be less than that of the generated hypohaloric acid. A too much amount of the oxygen-containing gas from the outer source would bother the flow of the electrolyte and thus reduce the electrolysis efficiency. Therefore, the mixing ratio of the oxygen-containing gas and the water to be treated is selected such that the oxygen-containing gas / the water to be treated (volume ratio) is 0.1 to 1,000 and preferably 1 to 500 thereby making it possible to disperse the water to be treated and supply and discharge the water smoothly and thus to keep the electrolysis efficiency high. From the viewpoint that an electrolysis can be conducted in a high current efficiency also in a high current density, it is preferred that the cathode is formed into porous and the water to be treated is sprayed in an average droplet size of 1 to 100 μm.

Specific examples of the oxygen-containing gas are oxygen, air, or PSA oxygen. The gas is preferably high in the oxygen content so as to generate a large amount of hydrogen peroxide. From an economic viewpoint, PSA oxygen is preferably used. PSA oxygen can be obtained by absorbing nitrogen gas in the air by utilizing the difference in activity with respect to the gas or the molecular sieve effect with the use of zeolite, separating the nitrogen and the oxygen, and then taking out only the oxygen gas. In this operation, argon in the air remains in the oxygen and the purity thereof is on the order of 95 percent.

The oxygen-containing gas which is substantially free of carbon dioxide is preferred because the apparatus can be operated at a high current efficiency for a long period of time. The oxygen-containing gas substantially free of carbon dioxide can be prepared by allowing the raw material gas to pass through an alkali aqueous solution. However, with the objective of industrial mass-production, the oxygen-containing gas substantially free of carbon dioxide is preferably PSA oxygen obtained by absorbing and removing the nitrogen gas from the air and then taking out the oxygen fractions. Since carbon dioxide is absorbed and removed with the nitrogen, PSA oxygen is substantially free of carbon dioxide. With the objective of the sufficient supply of the oxygen-containing gas to the water in the cathode section, the pressure of the gas is preferably atmospheric pressure or higher.

Next, the sterilization and cleaning of the water to be treated which is sea water using the water-treatment apparatus 1 will be described but the present invention is not limited thereto.

A direct voltage is applied to the anode 3 and the cathode 2 while driving the pump 16. Sea water is drawn by the pump 16 and introduced through the supplying pipe 17 to the anode section 8. The sea water is then introduced from the anode section 8 via the conduit 18 to the cathode section 9.

By applying a voltage, a hypohaloric acid is generated from the anode 3. The water is sterilized and cleaned by annihilating the bacteria and virus in the sea water with this hypohaloric acid. The sterilized and cleaned sea water (treated water) is introduced into the cathode section 9 where the remaining hypohaloric acid is reduced and decomposed by hydrogen peroxide generated from the cathode 4. The sea water free of the hypohaloric acid is introduced via the discharging pipe 19 to another system.

In this way, sea water is sterilized and cleaned in the anode section 8 and the hypohaloric acid contributed to the sterilization and cleaning treatment is decomposed by hydrogen peroxide in the cathode section 9. Therefore, the treated sea water contains no hypohaloric acid and thus will not pollute the environment.

Therefore, the water-treatment apparatus 1 of the present invention is free from any secondary pollution caused by the treated water. Furthermore, the apparatus can sterilize and clean a large quantity of the water to be treated and is highly economical.

Fig. 4 shows the second example of the apparatus of the present invention which is different from the apparatus 1 in that the water to be treated introduced to the anode section 8 and the cathode section 9, individually and then mixed in a mixing bath 23. The same numerals are fixed to the same parts of the apparatus 1 and the description therefor is omitted.

As shown in Fig. 4, a supplying pipe 24 for the water to be treated is connected to a first supplying pipe 26 having a pump means 25 such as a suction pump and a second supplying pipe 28 having a pump means 27 such as a suction pump. The first supplying pipe 26 and the second supplying pipe 28 are connected to the inlet 12 of the anode section 8 and the inlet 14 of the cathode section 9, respectively.

A first conduit 29 is connected at one end to the outlet 13 of the anode section 8 and at the other end to the mixing bath 23. A second conduit 30 is connected at one end to the outlet 15 of the cathode section 9 and at the other end to the mixing bath 23 whereby the treated water from the first and second conduits flows thereinto and are mixed. Alternatively, the mixing bath 23 may be provided with a stirring means (not shown) for stirring the mixed water in the bath 23. A discharging pipe 31 is connected to the mixing bath 23.

Although the anode and cathode sections 8, 9 are connected via the conduits 29, 30 to the mixing bath 23, respectively, the sections 8, 9 may be connected to the mixing bath 23 directly without using the conduits. That is, the anode and cathode sections 8, 9 may be constructed integrally with the mixing bath 23.

In the apparatus constructed as shown in Fig. 4, the water to be treated is introduced to the anode section 8 and the cathode section 9, respectively by the action of the pumps 25, 27. The water to be treated in the anode section 8 is sterilized and cleaned by applying a voltage such that the bacteria and virus in the water are annihilated by a hypohaloric acid generated from the anode 3. The sterilized and cleaned water is then introduced via the first conduit 29 to the mixing bath 23.

On the other hand, the water to be treated in the cathode section 9 is sterilized and cleaned by applying a voltage such that the bacteria and virus in the water are annihilated by hydrogen peroxide generated from the cathode 4. The sterilized and cleaned water is then introduced via the second conduit 30 to the mixing bath 23.

In the mixing bath, the treated water introduced from the anode and cathode sections 8, 9 is contacted and mixed with each other. By mixing the water, the remaining hypohaloric acid contained in the treated water from the anode section 8 is reduced and decomposed with the hydrogen peroxide contained in the treated water from the cathode section 9. Furthermore, although the treated water from the cathode section 9 has been sterilized and cleaned by hydrogen peroxide, the bacteria if remaining not sterilized and cleaned by hydrogen peroxide are annihilated by the hypohaloric acid contained in the treated water from the anode section 8 thereby effecting the sterilization and cleaning of the treated water from the cathode section 9 more completely.

The water free of the hypohaloric acid is introduced via the discharging pipe 31 to another system.

In this manner, the water to be treated is introduced to the anode and cathode sections 8, 9 respectively and after being sterilized and cleaned individually there is then introduced to the mixing section 23 where the hypohaloric acid which has contributed for the sterilization and cleaning in the anode section 9 is decomposed by hydrogen peroxide. Since the treated water contains no hypohaloric acid, it will not pollute the environment.

Therefore, the water-treatment apparatus 1 of the present invention will not cause a secondary pollution and can sterilize and clean a large quantity of the water to be treated and thus is highly economical.

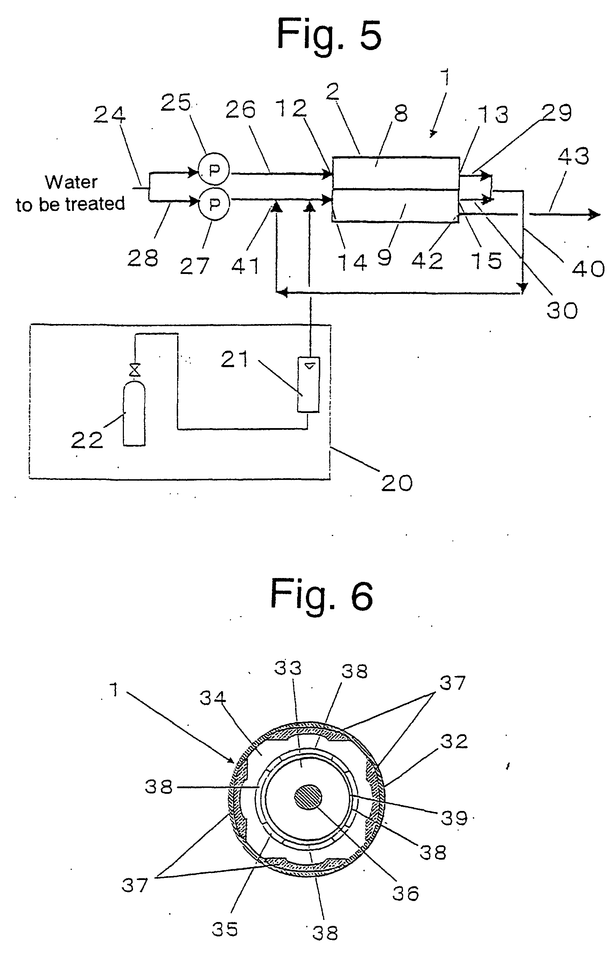

Fig. 5 shows a third example of the water-treatment apparatus 1 of the present invention and is different from the second example of the apparatus in that after the water to be treated introduced to the anode and cathode sections 8, 9 respectively is mixed, the water is introduced to the cathode section 9 again via a returning pipe 40. The same numerals are applied to parts which are the same as those of the first example and the descriptions are omitted.

As shown in Fig. 5, a supplying pipe 24 for the water to be treated is connected to a first supplying pipe 26 provided with a pump means 25 such as a suction pump and to a second supplying pipe 28 provided with a pump means 27 such as a suction pump. The first supplying pipe 26 is connected to the inlet 12 of an anode section 8, while the second supplying pipe 28 is connected to the inlet 14 of the cathode section 9.

The outlet 13 of the anode section 8 is connected to a first conduit 29, while the outlet 15 of the cathode section 9 is connected to a second conduit 30. The first and second conduits are connected directly to the returning pipe 40. The returning pipe 40 is connected via an inlet 41 for returning the water to the second supplying pipe 28 such that the water is introduced again via the inlet 14 to the cathode section 9. The water is discharged from an outlet 42 via a discharging pipe 43.

In the water-treatment apparatus 1 structured as shown in Fig. 5, the water to be treated is introduced to the anode and cathode sections 8, 9, respectively by the action of the pumps 25, 27. The water to be treated in the anode section 8 is sterilized and cleaned by applying a voltage such that the bacteria and virus are annihilated by a hypohaloric acid generated from the anode 3. The treated water is then introduced via the first conduit 29 to the returning pipe 40.

On the other hand, the water to be treated in the cathode section 9 is sterilized and cleaned by applying a voltage such that the bacteria and virus are annihilated by hydrogen peroxide generated from the cathode 4. The treated water is then discharged from the system via the second conduit 30 and the discharging pipe 43 but the water passing through the second conduit 30 is introduced to the returning pipe 40.

In the returning pipe 40, the hypohaloric acid is decomposed by hydrogen peroxide and then the hypohaloric acid-free water is introduced via the inlet 41 to the cathode section 9. By introducing the water to the cathode section, the hypohaloric acid can be decomposed completely.

The water free of hypohaloric acid is introduced via the discharging pipe to another system.

In this manner, the water to be treated is introduced to the anode and cathode sections 8, 9 respectively and after being sterilized and cleaned individually there is then introduced to the cathode section 9 where the hypohaloric acid which has contributed for the sterilization and cleaning in the anode section 8 is decomposed with hydrogen peroxide. Since the treated water contains no hypohaloric acid, it will not pollute the environment.

Therefore, the water-treatment apparatus 1 of the present invention will not cause a secondary pollution and can sterilize and clean a large quantity of the water to be treated and thus is highly economical.

The operation mode of the present invention has been described with respect to the case where the water is treated with a single apparatus. However, the water may be treated with a plurality of the apparatuses 1 which may be arranged in series or parallel. The apparatuses arranged in series can treat the water more completely, while the apparatus arranged in parallel can increase the treating amount per unit period.

Fig. 6 shows another example of the chamber 32 of the apparatus of the present invention and is different from the above-described chamber 2 in the outer shape and the arrangement of an anode section 33 and a cathode section 34.

That is, the chamber 32 is in a cylindrical shape and provided therein with an inner tube 35 having a smaller diameter and arranged coaxially therewith. The chamber 32 is thus dual-structured. The chamber has a pillar-shaped anode 36 arranged coaxially therewith. The chamber 32, i.e., the outer tube is provided on the inner surface with a plurality of (four in this example) cathodes 37 arranged at certain intervals in the circumference direction. The inner tube 35 has openings at each of the portions aligned with the anode 36 and the cathode 37 facing thereto. That is, four openings 38 are arranged in the inner tube 35 at intervals of 90 degrees in the circumferential direction thereof while four cathodes 37 are arranged at intervals of 90 degrees on the inner peripheral surface of the chamber 32 which is in the outer radial direction from the opening. The inner tube 35 is provided on its inner peripheral surface with a cylindrical diaphragm 39 such that the inside and outside of the inner tube are formed into an anode section 33 and a cathode section, respectively. Therefore, after the water to be treated introduced to the anode section 33 is discharged, it is again introduced to the cathode section 34. The water to be treated passing through the anode section 33 and the cathode section 34 is then mixed and discharged.

By arranging the cathodes 37 and the anode 36 on the inner peripheral surface and axial center of the chamber 32, respectively, the surface area of the cathodes can be increased and thus the amount of the treating substance generated therefrom can be increased, thereby ensuring the treatment of the water. However, if the water can be treated satisfactorily, the cathode 37 and the anode 36 may be arranged on the axial center and inner peripheral surface of the chamber 32, respectively.

Even though the chamber 32 of the water-treatment apparatus is constructed as shown in Fig. 6, the apparatus can perform the same effects as described above. When the apparatus of this example is described with reference to the apparatus of the first example shown in Fig. 3, by applying a direct voltage to the cathodes 37 and the anode 36 while driving a pump 16, part of the water to be treated is suctioned by a pump 16 and introduced to the anode section 33 and then to the cathode section 34.

The water to be treated in the anode section 33 is sterilized and cleaned by applying a voltage such that the bacteria and virus in the water are annihilated by a hypohaloric acid generated from the anode 36. The sterilized and cleaned water is then introduced to the cathode section 34 and the remaining hypohaloric acid is reduced and decomposed by hydrogen peroxide generated from the cathodes 37. Thereafter, the water free of hypohaloric acid is introduced to another system or the like.

In this manner, since the water to be treated is sterilized and cleaned in the anode section 33 and the hypohaloric acid which has contributed for the sterilization and cleaning in the anode section 33 is decomposed by hydrogen peroxide, the treated water contains no hypohaloric acid and thus will not pollute the environment.

Therefore, the water-treatment apparatus 1 of the present invention is free from any secondary pollution caused by the treated water. Furthermore the apparatus can sterilize and clean a large quantity of the water to be treated and is highly economical.

[Best Mode for Carrying out the Invention]

The present invention is further described with reference to the following examples and comparative example but is not limited thereto.

Example 1

In a polyvinyl chloride-made chamber 2 having a shape as shown in Figs. 1 with a length of 1 m, a width of 250 mm, and a height of 100 mm, four graphite plates (EG-30X manufactured by Nippon Carbon Co., Ltd.), with a size of 200 mm x 80 mm and four titanium-platinum plates with a size of 200 mm x 80 mm are mounted at intervals of 50 mm along the longitudinal direction of the chamber 2, respectively. At the center of the chamber, "Nafion 117" manufactured by Dupont Co., Ltd. is arranged as a diaphragm. The distance between the diaphragm and the graphite plates and titanium-platinum plates was 100 mm.

Five sets of the water-treatment apparatus of the present invention having such a chamber 2 are connected in series. As shown in Fig. 3, the inlet 12 of the anode section 8 of the most upper stream end chamber 2 is connected to the supplying pipe for the water to be treated and the outlet 13 of the anode section 8 is connected via the conduit 18 to the inlet 14 of the corresponding cathode section 9.

The graphite plate electrode and titanium-platinum plate electrode in each pair of electrodes were connected to a cathode side and an anode side, respectively, and an electrolysis was conducted such that the apparent current density and bath voltage are to be 15 A/$m^2$ and 1.6 to 2.2 V, respectively with a direct current source. Sea water of a temperature of 15 °C containing microbes was allowed to pass the anode section at a rate of 1 mm/sec by operating a sea water suction pump 16. As shown in Fig. 3, before the water is introduced to the cathode section 9, it was mixed with PSA oxygen supplied from an oxygen-supplying source at a rate of 3 m/sec and introduced to the inlet 14. After part of the water sterilized and cleaned in such a continuous manner was sampled so as to measure the number of microbes and effective haloric acid concentration, no microbes and effective haloric acid was detected.

Example 2

With the same electrolysis conditions of Example 1, the inlet 12 of the anode section 8 and the inlet 14 of the cathode section 9 in the most upper stream end chamber 2 are connected to a supplying pipe for the water to be treated, respectively and a part of the water after being mixed in a mixing bath 3 was sampled so as to measure the number of microbes and effective haloric acid concentration. However, no microbes and effective haloric acid was detected.

Comparative Example 1

Under the same conditions of Example 1, the sterilization and cleaning treatment was conducted only by the anode reaction. The sea water after the treatment was sterilized and cleaned but hypohaloric acid was detected.

[Applicability in the Industry]

The method and apparatus of the present invention can achieve the effective sterilization and cleaning of the water to be treated such as sea water, lake water, river water, ground water or industrial water without polluting the environment.

[Brief Description of the Drawings]

Fig. 1 is a schematic view of a first example of the chamber of an apparatus according to the present invention.
Fig. 2 is a cross-sectional view of the apparatus shown in Fig. 1.
Fig. 3 is a structural view showing a first example of operational mode of the water-treatment apparatus of the present invention.
Fig. 4 is a structural view showing a second example of operational mode of the water-treatment apparatus of the present invention.
Fig. 5 is a structural view showing a second example of operational mode of the water-treatment apparatus of the present invention.
Fig. 6 is a schematic view showing a second example of the chamber of the water-treatment apparatus of the present invention.

**Claims**

1. A method for purifying water wherein a chamber is partitioned into an anode section and a cathode section by a diaphragm, a voltage is applied between the anode and the cathode while an oxygen-containing gas is supplied to said cathode section so as to generate a hypohaloric acid and hydrogen peroxide in said anode section and said cathode section, respectively, and the water to be treated is first supplied to said anode section to be contacted with the hypohaloric acid and is then introduced to said cathode section to be contacted with hydrogen peroxide.

2. A method for purifying water wherein a chamber is partitioned into an anode section and a cathode section by a diaphragm, a voltage is applied between the anode and the cathode while an oxygen-containing gas is supplied to said cathode section so as to generate a hypohaloric acid and hydrogen peroxide in said anode section and said cathode section, respectively, and the water to be treated which has been supplied to said anode section so as to be contacted with the hypohaloric acid is mixed with the water to be treated which has been supplied to said cathode section to be contacted with the hydrogen peroxide.

3. A method for purifying water wherein a chamber is partitioned into an anode section and a cathode section by a diaphragm, a voltage is applied between the anode and the cathode while an oxygen-containing gas is supplied to said cathode section so as to generate a hypohaloric acid and hydrogen peroxide in said anode section and said cathode section, respectively, and the water to be treated which has been supplied to said anode section so as to be contacted with the hypohaloric acid is mixed with part of the water to be treated which has been supplied to said cathode section to be contacted with the hydrogen peroxide, followed by supplying the mixture to said cathode section again.

4. The method according to claim 1, 2, or 3 wherein a carbon electrode is used as a cathode, a metal electrode is used as an anode, and a voltage of 1.5 V or higher and 20 V or lower is supplied therebetween.

5. The method according to claim 1, 2, or 3 wherein the water to be treated contains a halogen ion in an amount of 0.01 to 1 mol/l.

6. An apparatus for purifying water which comprises a chamber separated by a partition at least part of which is formed by a diaphragm, into an anode section provided therein with one or more anodes generating a hypohaloric acid by the application of a voltage and into a cathode section provided therein with one or more cathodes generating hydrogen peroxide by the application of a voltage wherein said anode section is provided with a supplying tube for supplying the water to be treated thereto and an introducing pipe for introducing the water treated in said anode section to said cathode section and said cathode section is provided with a supplying pipe for supplying thereto an oxygen-containing gas and a discharging pipe for discharging the water treated in said cathode section.

7. An apparatus for purifying water which comprises a chamber separated by a partition at least part of which is formed by a diaphragm, into an anode section provided therein with one or more anodes generating a hypohaloric acid by the application of a voltage and into a cathode section provided therein with one or more cathodes generating hydrogen peroxide by the application of a voltage wherein said anode section is provided with a supplying pipe for supplying the water to be treated to the anode section and a discharging pipe for discharging the water treated in the anode section and said cathode section is provided with a supplying pipe for supplying the water to be treated to the cathode section, a supplying pipe for supplying an oxygen-containing gas to the cathode section, and a discharging pipe for discharging the water treated in the cathode section; and said discharging pipes of said anode and cathode sections are connected with a mixing bath provided with a discharging pipe for discharging the water purified in said bath.

8. An apparatus for purifying water which comprises a chamber separated by a partition at least part of which is formed by a diaphragm, into an anode section provided therein with one or more anodes generating a hypohaloric acid by the application of a voltage and into a cathode section provided therein with one or more cathodes generating hydrogen peroxide by the application of a voltage wherein said anode section is provided with a supplying pipe for supplying the water to be treated to the anode section and a discharging pipe for discharging the water treated in the anode section and said cathode section is provided with a supplying pipe for supplying the water to be treated to the cathode section, a supplying pipe for supplying an oxygen-containing gas to the cathode section, and two discharging pipes for discharging the water treated in the cathode section; and said discharging pipe of said anode section is connected with one of said two discharging pipes of said cathode section and further connected with said supplying pipe for supplying the water to be treated into said cathode section.

9. The apparatus for purifying water according to claim 6, 7, or 8 wherein a halogen ion adding bath is arranged at the prior stage of said apparatus.

# Fig. 1

# Fig. 2

# Fig. 3

# Fig. 4

# Fig. 5

Water to be treated

# Fig. 6

## INTERNATIONAL SEARCH REPORT

| International application No. |
| --- |
| PCT/JP01/03722 |

**A. CLASSIFICATION OF SUBJECT MATTER**
Int.Cl⁷ C02F1/467

According to International Patent Classification (IPC) or to both national classification and IPC

**B. FIELDS SEARCHED**

Minimum documentation searched (classification system followed by classification symbols)
Int.Cl⁷ C02F1/467, C02F1/70, C02F1/72

Documentation searched other than minimum documentation to the extent that such documents are included in the fields searched
Jitsuyo Shinan Koho        1926-1996    Toroku Jitsuyo Shinan Koho  1994-2001
Kokai Jitsuyo Shinan Koho  1971-2001    Jitsuyo Shinan Keisai Koho  1996-2001

Electronic data base consulted during the international search (name of data base and, where practicable, search terms used)
WPI/L

**C. DOCUMENTS CONSIDERED TO BE RELEVANT**

| Category* | Citation of document, with indication, where appropriate, of the relevant passages | Relevant to claim No. |
| --- | --- | --- |
| A | JP, 1-228589, A (Susumu KONDO), 12 September, 1989 (12.09.89), Claims; page 3, upper left column, line 4 to upper right column, line 6; drawings  (Family: none) | 1,6,9 |
| A | JP, 1-317592, A (Susumu KONDO), 22 December, 1989 (22.12.89), page 3, upper left column, line 3 to lower left column, line 5; drawings  (Family: none) | 2,7,9 |
| A | JP, 57-32788, A (Mitsubishi Gas Chemical Company, Inc.), 22 February, 1982 (22.02.82), Claims; page 2, lower right column, line 10 to page 3, upper left column, line 12  (Family: none) | 1-9 |
| A | JP, 9-94580, A (Noritsu Koki Co., Ltd.), 08 April, 1997 (08.04.97), Claims; drawings  (Family: none) | 1-9 |

☒ Further documents are listed in the continuation of Box C.    ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 15 June, 2001 (15.06.01) | 26 June, 2001 (26.06.01) |

| Name and mailing address of the ISA/ Japanese Patent Office | Authorized officer |
| --- | --- |
| Facsimile No. | Telephone No. |

Form PCT/ISA/210 (second sheet) (July 1992)

**INTERNATIONAL SEARCH REPORT**

International application No.

PCT/JP01/03722

C (Continuation). DOCUMENTS CONSIDERED TO BE RELEVANT

| Category* | Citation of document, with indication, where appropriate, of the relevant passages | Relevant to claim No. |
|---|---|---|
| A | JP, 57-65399, A (Asahi Chemical Industry Co., Ltd.),<br>20 April, 1982 (20.04.82),<br>Claims; Fig. 1   (Family: none) | 1-9 |

Form PCT/ISA/210 (continuation of second sheet) (July 1992)